# EUROPEAN PATENT SPECIFICATION

(11) **EP 0 358 770 B1**
(45) Date of publication and mention of the grant of the patent: **27.10.1993**
(21) Application number: 89901315.5
(22) Date of filing: 13.01.1989
(51) Int. Cl.: B30B 1/18, B30B 11/02

(54) **ELECTRIC POWDER MOLDING MACHINE**
ELEKTRISCHE PULVER-GIESSVORRICHTUNG
MACHINE ELECTRIQUE DE MOULAGE DE POUDRE

(30) Priority: 16.01.1988 JP 5704/88
(43) Date of publication of application: 21.03.1990
(73) Proprietor: FANUC LTD., Minamitsuru-gun, Yamanashi 401-05 (JP)
(72) Inventor: INABA, Yoshiharu, Kawasaki-shi Kanagawa 214 (JP); NAITO, Hideo, Hino-shi Tokyo 191 (JP); WATANABE, Kikuo, Room 7-209, FANUC Manshonharimomi, Minamitsuru-gun, Yamanashi 401-05 (JP); MURANAKA, Masaki, Shibuya-ku Tokyo 150 (JP)
(74) Representative: Billington, Lawrence Emlyn
(86) International application number: JP8900032
(87) International publication number: WO8906597

(56) References cited:
- GB-A- 1 216 397
- JP-A-61 242 794
- JP-U- 6 267 695
- US-A- 2 885 618
- US-A- 3 353 215
- PATENT ABSTRACTS OF JAPAN, vol. 11, no. 90 (M-573), 20th March 1987; & JP-A-61 242 793 (MITSUBISHI ELECTRIC) 29-10-1986

## Description

The present invention relates to a powder compacting machine.

Conventionally, compacts, such as machine parts, are obtained with use of a powder compacting machine in which a punch slidably fitted in a die is driven by means of a hydraulic or electric drive mechanism, for compaction of a powder material in a compacting die space defined by the die and the punch. In general, the powder compacting machine of this type is not provided with a pressure control mechanism for controlling a compacting pressure to be applied to the powder material by means of the punch, and such a machine is disclosed in US-A-2,885,618. Even if the punch is driven under constant conditions, therefore, the compacting pressure varies, accompanying changes of the compacting machine temperature and the ambient temperature and wear of components of the drive mechanism, such as a link mechanism. Thus, the individual compacts are liable to vary from one another in density and weight. In other words, as the compacting pressure varies, the dimensions of one compact vary from those of another even though the die space is filled with a certain powder material. Moreover, the compacts vary from one another in weight even if the powder material for one compact is supplied by a plurality of installments to obtain a compact of predetermined dimensions.

In order to eliminate these awkward problems, as is generally known, the powder compacting machine is provided with a mechanism for adjusting the compacting pressure. The conventional pressure adjusting mechanism, however, is composed of a number of mechanical components, so that its construction is complicated. Moreover, it requires troublesome adjustment work before operation, especially after the replacement of the die and the punch, accompanying change of compacting conditions.

According to the present invention there is provided an electrically-operated powder compacting machine comprising a die-punch mechanism including a die having a through hole and two punches, the two punches being slidably removably fitted in the through hole to define in conjunction with the die a die space, the two punches being movable relatively to the die for the compaction of a powder material in the die space, and each punch being driven by a respective associated drive mechanism arranged to drive the associated punch under the control of a control means in dependence upon a comparison between actual and commanded values, characterised in that: each punch drive mechanism is itself driven by a respective associated servomotor to move the associated punch relatively to the die; each punch drive mechanism comprises a ball nut supported for rotation, a ball screw threadedly engaged with said ball nut and connected to the associated punch so as to be integrally movable therewith, and coupling means operatively connecting the ball nut and the associated servomotor; a detecting means is provided for detecting the actual compacting pressure produced when the or each punch moves; and the control means is adapted to control the drive of the servomotors in dependence upon an output signal from the compacting pressure detecting means so that the compacting pressure attains a predetermined value.

According to the present invention, as described above, feedback control is effected in accordance with the detected value of the actual compacting pressure, so that compacts with required green density distribution, e.g., uniform distribution, and high dimensional accuracy can be obtained. Moreover, electric compacting pressure control is effected by the control means through the medium of the servomotors, while the or each punch is being pressed. Even when the die-punch mechanism is replaced as compacting conditions, such as the compact type, are changed, therefore, there is no need of troublesome adjustment work which is required when a pressure control mechanism composed of many machine parts is used. Thus, the powder compacting machine is high in production efficiency and operability. Also, there is no possibility of soiling by oil, and noises and vibrations can be reduced, so that the working environment is fine. In contrast with the case of a conventional hydraulic powder compacting machine, furthermore, energy consumption can be reduced to about one-third, so that running costs can be lowered.

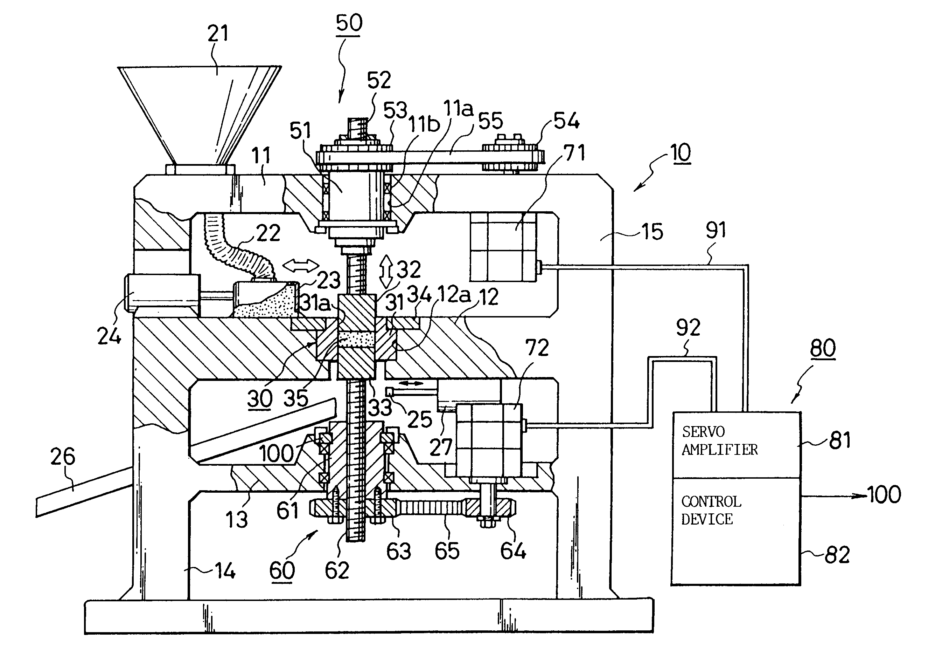

### Brief Description of the Drawing

The drawing is a schematic front view, partially in section, showing an electric powder compacting machine according to one embodiment of the present invention.

An electric powder compacting machine according to one embodiment of the present invention will now be described with reference to the drawing.

The powder compacting machine is an electric one-axis punch press, which comprises a frame 10 including an upper wall 11, an intermediate wall 12, a lower wall 13, and side walls 14 and 15. A hopper 21 for the supply of powder material is mounted on one side of the upper wall 11, and the hopper 21 is connected, by means of a flexible hose 22, to a feeder 23 which is movably mounted on the intermediate wall 12. The feeder 23 is driven by an electromagnetic actuator 24 on the side wall 14 so that it reciprocates on the upper surface of the intermediate wall 12, between a shunting position and a powder material supply position right over a die space of a die-punch mechanism mentioned later. In the supply position, the powder material is fed into the die space through an opening in the bottom face of the feeder. A push member 25 and a chute 26 are arranged under the intermediate wall 12. Moldings formed in the die-punch mechanism are disengaged from the die-punch mechanism by means of the push member 25, which is driven by means of an electromagnetic actuator 27 provided on the lower surface of the intermediate wall 12, and are then taken out through the chute 26.

The die-punch mechanism 30 for compressing the powder material comprises an integral die 31 and a pair of cylindrical punches 32 and 33. The die 31, which has a central through hole 31a extending along its axis, is fitted in stepped hole 12a, bored through the central portion of the intermediate wall 12 so as to extend in the direction of the height of the compacting machine, and is fixed to the intermediate wall 12 in a replaceable manner, by means of a ring-shaped fixing member 34. The upper and lower punches 32 and 33 are removably fitted in the hole 31a of the die 31 for sliding motion, and, in conjunction with the die 31, define the compacting die space 35 which is filled with the powder material.

A drive mechanism 40 for driving the upper and lower punches 32 and 33 is provided with upper and lower drive sections 50 and 60 of substantially the same construction which correspond individually to the punches. Both the drive sections are disposed in alignment with the die-punch mechanism 30. The upper drive section 50 includes a ball nut 51, a ball screw 52 threadedly engaged therewith, and a timing gear 53 fixed to the ball nut 51 for rotation in unison therewith. The ball nut 51 is housed in a through hole 11a, bored through the central portion of the upper wall 11 so as to extend in the direction of the height of the compacting machine, and is rotatably supported on the upper wall 11 by means of a bearing 11b. The ball screw 52 is connected, at its inner end, to the upper punch 32 for movement in unison therewith. Further, the upper drive section 50 includes a timing gear 54, which is fixed for integral rotation to the output shaft of an AC servomotor 71 fixed to the upper wall 11, and a timing belt 55 passed around and between the two gears 53 and 54. The lower drive section 60 includes a ball nut 61, a ball screw 62, timing gears 63 and 64, and a timing belt 65, which correspond to the elements 51 to 55, respectively. The inner end of the ball screw 62 is connected to the lower punch 33, and the gear 64 is fixed to the output shaft of an AC servomotor 72 which is fixed to the lower wall 13.

Control means 80 for controlling the drive of various operating sections of the powder compacting machine, including the servomotors 71 and 72, includes a servo amplifier 81 and a control device 82 for controlling the amplifier. The servo amplifier 81, which is connected to both the servomotors by means of power lines 91 and 92, is operable to control driving current to be applied to these motors. The control device 82, whose arrangement is not shown, includes a keyboard for setting the compacting pressure and the like, an input section for receiving an output signal indicative of a detected compacting pressure from compacting pressure detecting means, e.g., a strain gage 100 attached to the ball nut 61 of the lower drive section 60, a comparator section for comparing the set compacting pressure and the detected compacting pressure, an output section for delivering a control output corresponding to the result of comparison to servo amplifier 81, and a memory section storing control programs and the like for various operations of the powder compacting machine. These control programs include various punch operation programs mentioned below, by way of example, for operating the upper and lower punches 32 and 33 in various modes.
(i) A first operation program for applying the compacting pressure by means of the upper punch 32 with the lower punch 33 held in a predetermined position.
(ii) A second operation program for applying the compacting pressure by means of the upper and lower punches 32 and 33.
(iii) A third operation program for alternately operating the upper and lower punches 32 and 33.
(iv) A fourth operation program for supplying the powder material for one compact by a plurality of installments and applying the compacting pressure by means of only the upper punch 32.

The following is a description of the operation of the powder compacting machine constructed as aforesaid.

First, the die 31 corresponding to the type of the compact and the upper and lower punches 32 and 33 are mounted on the powder compacting machine, the required compacting pressure and punch operation program are selected by means of the keyboard of the control means 80, and the operation of the powder compacting machine is started.

The compacting machine is operated under the control of the control means 80, in accordance with the control programs stored in the memory section of the control means 80. At the start of the operation, the upper punch 32 takes a shunting position in which it is upwardly disengaged from the central through hole 31a of the die 31, while the lower punch 33 is fitted in the hole 31a so that the die 31 and the lower punch 33 define a powder material receiving space (hereinafter referred to as die space 35) corresponding to the die space 35. Then, the electromagnetic actuator 24 is operated to move the feeder 23 from the shunting position to the powder material supply position right over the die space 35, and the powder material supplied through the hopper 21 and hose 22 to the feeder 23 is filled into die space 35 through the opening in the bottom face of the feeder. After the material filling, the feeder 23 is returned to the shunting position. Then, the servomotor 71 is driven in the direction to produce the compacting pressure, thereby rotatively driving the ball nut 51 through the medium of the gear 54, the belt 55, and the gear 53, and the upper punch 32, which is integrally movable with the ball screw 52 threadedly engaged with the nut 51, is lowered to be fitted into the hole 31a of the die 31.

If the first punch operation program is selected, the servomotor 72 is nonrotatably locked by means of, e.g., an electromagnetic brake (not shown) to keep the punch 33 in a fixed position, while the rotation of the servomotor 71 is continued so that the powder material is subjected to a push force by means of the upper punch 32. During the compacting operation in accordance with this program, the compacting pressure is feedback-controlled as mentioned later. In consequence, variations in density and weight of compacts are extremely small.

If the second operation program is selected, the servomotors 71 and 72 are driven simultaneously, so that a great compacting pressure can be obtained. By controlling the output torques of both the servomotors 71 and 72, moreover, a portion with relatively low green density can be formed in any desired region of the compact with respect to the direction of its height. More specifically, the low-density portion can be formed in the central portion of the compact, with respect to its height direction, by controlling the output torques of the two motors for substantially the same value. By controlling the output torques of the two motors for different values, the low-density portion can be formed on either one side of the compact deviated from the central portion with respect to the height direction. Also in accordance with this operation program, the density and weight of the compacts can be made uniform.

If the third operation program is selected, the upper and lower punches 32 and 33 are pressed alternately. Owing to vibration caused by this operation, compacts with high and uniform green density can be obtained, so that variations between compacts can be eliminated.

If the fourth operation program is selected, the powder material for one compact is supplied by a plurality of installments to the die space 35, and the press operation by means of the upper punch 32 is performed each time the lot supply of the material is finished. When the press operation for the lot-supplied material is completed, the upper punch 32 is disengaged from the hole 31a of the die 31 and moved up to the shunting position, while being finely reciprocated, whereupon the powder material is additionally supplied. According to such compacting operation, the green density distribution of the compacts is adjustable. More specifically, the green density distribution can be made uniform by controlling the push force for the press operation for each lot of the supplied material so as to be fixed. By varying the push force depending on the press operation, on the other hand, the green density can be changed with respect to the height direction of the compacts. Since the supply of the powder material and the press operation of the upper punch 32 are performed a plurality of times, as mentioned before, a tamping effect is produced, so that the green density distribution can be made uniform even for compacts of complicated shapes or elongated configuration.

While the compacting operation is being executed in accordance with the selected one of the various punch operation programs, including the aforementioned first to fourth programs, the output signal from the strain gage 100, indicative of the actual compacting pressure, is applied to the comparator section of the control device 82 of the control means 80 through the input section of the device, and is compared to the set compacting pressure in the comparator section. The output torque or torques of one or both of the servomotors 71 and 72 are controlled by means of the servo amplifier 81 of the control means 80 for receiving the control output corresponding to the comparison result. When the detected compacting pressure attains a set value so that the manufacture of the compact is finished, the following operation is performed by controlling a corresponding one or ones of the servomotors 71 and 72 and the electromagnetic actuator 27. First, the push force produced between the upper and lower punches 32 and 33 is reduced, and the compact held between the two punches is then disengaged from the hole 31a of the die 31 and moved to a predetermined height-direction position below the hole. Thereafter, the upper punch 32 is moved up to the shunting position above the die 31. The compact placed on the lower punch 33 is dropped onto the chute 26 by means of the push member 25, and is transferred to the outside through the chute. Finally, the lower punch 33 is fitted into the hole 31a of the die 31, whereupon the operation for one compact is finished.

According to the embodiment described above, the present invention is applied to a one-axis punch press having an integral die and a pair of punches. However, the present invention is not limited to this, and may be also applied to various powder compacting machines of types capable of executing the aforementioned compacting pressure control, and the various elements of the powder compacting machines may be modified variously. For example, a load cell may be used in place of the strain gage. In the above embodiment, moreover, the strain gage is attached to the ball nut of the lower drive section. Alternatively, however, it may be attached to a suitable part of the drive mechanism permitting the detection of the compacting pressure.

## Claims

1. An electrically-operated powder compacting machine comprising a die-punch mechanism (30) including a die (31) having a through hole (31a) and two punches (32,33), the two punches (32,33) being slidably removably fitted in the through hole (31a) to define in conjunction with the die (31) a die space (35), the two punches (32,33) being movable relatively to the die (31) for the compaction of a powder material in the die space (35), and each punch (32,33) being driven by a respective associated drive mechanism (50,60) arranged to drive the associated punch (32,33) under the control of a control means (80) in dependence upon a comparison between actual and commanded values, characterised in that: each punch drive mechanism (50,60) is itself driven by a respective associated servomotor (71,72) to move the associated punch (32,33) relatively to the die (31); each punch drive mechanism (50,60) comprises a ball nut (51,61) supported for rotation, a ball screw (52,62) threadedly engaged with said ball nut (51,61) and connected to the associated punch (32,33) so as to be integrally movable therewith, and coupling means (53 and 55, 63 and 65) operatively connecting the ball nut (51,61) and the associated servomotor (71,72); a detecting means (100) is provided for detecting the actual compacting pressure produced when the or each punch (32,33) moves; and the control means (80) is adapted to control the drive of the servomotors (71,72) in dependence upon an output signal from the compacting pressure detecting means (100) so that the compacting pressure attains a predetermined value.

2. An electrically-operated powder compacting machine according to claim 1, wherein the compacting pressure detecting means (100) comprises a strain gauge or a load cell.

3. An electrically-operated powder compacting machine according to claim 1 or 2, wherein the control means (80) comprises a memory section storing control programs for various operations of the powder compacting machine.

4. An electrically-operated powder compacting machine according to claim 3, wherein the stored control programs comprise:
(i) a first operation program for applying the compacting pressure by means of the upper punch (32) with the lower punch (33) held in a predetermined position;
(ii) a second operation program for applying the compacting pressure by means of the upper and lower punches (32) and (33);
(iii) a third operation program for alternately operating the upper and lower punches (32) and (33);
(iv) a fourth operation program for supplying the powder material for one compact by a plurality of instalments and applying the compacting pressure by means of only the upper punch (32).

## Patentansprüche

1. Elektrische Pulver-Verdichtungsmaschine mit einem Gesenk/Stempel-Mechanismus (30) mit Stempel, die ein Gesenk (31) mit einem Durchgangsloch (31a) und zwei Stempeln (32, 33) einschließt, wobei die beiden Stempel (32, 33) in das Durchgangsloch (31a) schiebend verfahrbar eingepaßt sind, um in Verbindung mit dem Gesenk (31) einen Gesenkraum (35) zu definieren, wobei die beiden Stempel (32, 33) relativ zu dem Gesenk (31) zum Verdichten von pulverförmigem Material in dem Gesenkraum (35) bewegbar sind und jeder Stempel (32, 33) durch einen entsprechend verbundenen Antriebsmechanismus (50, 60) angetrieben wird, der derart angeordnet ist, daß der damit verbundene Stempel (32, 33) unter Einsatz eines Regelungsmittels (80) in Abhängigkeit von einem Vergleich zwischen Ist- und Soll-Werten geregelt angetrieben wird, **dadurch gekennzeichnet,** daß:
jeder Stempel-Antriebsmechanismus (50, 60) selbst durch einen entsprechend verbundenen Servomotor (71, 72) angetrieben wird, um den zugehörigen Stempel (32, 33) relativ zu dem Gesenk (31) zu bewegen;
jeder Stempel-Antriebsmechanismus (50, 60) eine drehbar gelagerte Kugelmutter (51, 61) enthält, wobei eine Spindel (52, 62) über ein Gewinde in die besagte Kugelmutter (51, 61) eingreift und mit dem zugehörigen Stempel (32, 33) derart verbunden ist, daß sie insgesamt damit bewegbar ist, und Koppelmittel (53 und 55, 63 und 65), die wirksam die Kugelmutter (51, 61) mit dem zugehörigen Servomotor (71, 72) verbinden;
ein Detektionsmittel (100) zur Detektion des aktuellen Verdichtungsdruckes, der durch die Bewegung des oder der Stempel (32, 33) erzeugt wird, vorgesehen ist; und
das Regelungsmittel (80) zur Regelung des Antriebes der Servomotoren (71, 72) in Abhängigkeit von eimen Ausgangssignal des Verdichtungsdruck-Detektionsmittels (100) entsprechend angepaßt sind, so daß der Verdichtungsdruck einen vorbestimmten Wert erreicht.

2. Elektrische Pulver-Verdichtungsmaschine nach Anspruch 1, wobei das Verdichtungsdruck-Detektionsmittel (100) eine Dehnungsmeßeinrichtung oder eine Kraftmeßdose enthält.

3. Elektrische Pulver-Verdichtungsmaschine nach Anspruch 1 oder 2, wobei das Regelungsmittel (80) einen Speicherbereich zum Speichern von Regelprogrammen für verschiedene Verfahrensschritte der Pulver-Verdichtungsmaschine enthält.

4. Elektrische Pulver-Verdichtungsmaschine nach Anspruch 3, wobei die gespeicherten Regelprogramme folgendes enthalten:
(i) ein erstes Betriebsprogramm zur Erzeugung des Verdichtungsdruckes mittels des oberen Stempels (32), während der untere Stempel (33) in einer vorbestimmten Position verweilt;
(ii) ein zweites Betriebsprogramm zum Aufbringen des Verdichtungsdruckes mittels des oberen und des unteren Stempels (32) und (33);
(iii) ein drittes Betriebsprogramm für die abwechselnde Betätigung des oberen und des unteren Stempels (32) und (33);
(iv) ein viertes Betriebsprogramm für die Förderung des pulverförmigen Materiales für eine Verdichtung mittels einer Vielzahl von Einbauteilen und die Erzeugung des Verdichtungsdruckes nur mittels des oberen Stempels (32).

## Revendications

1. Une machine électrique de compactage de poudre comprenant un mécanisme à poinçons-matrice (30) comportant une matrice (31) présentant un trou traversant (31a) et deux poinçons (32, 33), les deux poinçons (32, 33) étant montés de manière coulissante et amovible dans le trou traversant (31a) pour définir en liaison avec la matrice (31) un espace de matrice (35), les deux poinçons (32, 33) étant déplaçables par rapport à la matrice (31) pour le compactage d'une matière en poudre dans l'espace de matrice (35), et chaque poinçon (32, 33) étant entraîné par un mécanisme respectif de commande associée (50, 60) prévu pour entraîner le poinçon associé (32, 33) sous la commande d'un moyen de commande (80) en dépendance d'une comparaison entre une valeur réelle et une valeur réglée, caractérisée en ce que : chaque mécanisme d'entraînement de poinçon (50, 60) est lui-même entraîné par un servomoteur associé respectif (71, 72) pour déplacer le poinçon associé (32, 33) par rapport à la matrice (31) ; chaque mécanisme d'entraînement de poinçon (50, 60) comprend un écrou à bille (51, 61) monté pour tourner, une vis à bille (52, 62) en prise de manière filetée avec ledit écrou à bille (51, 61) est reliée au poinçon associé (32, 33) de manière à être déplaçable en même temps que lui, et des moyens de couplage (53 et 55, 63 et 65) reliant de manière opérationnelle l'écrou à bille (51, 61) et le servomoteur associé (71, 72) ; un moyen de détection (100) est prévu pour détecter la pression de compactage réelle produite lorsque le ou chaque poinçon (32, 33) se déplace ; et le moyen de commande (80) est prévu pour commander l'entraînement des servomoteurs (71, 72) en dépendance d'un signal de sortie du moyen de détection de pression de compactage (100) de telle manière que la pression de compactage atteigne une valeur déterminée à l'avance.

2. Une machine électrique de compactage de poudre selon la revendication 1, dans laquelle le moyen (100) de détection de pression de compactage comprend une jauge de contrainte ou une cellule de charge.

3. Une machine électrique de compactage de poudre selon la revendication 1 ou 2, dans laquelle le moyen de commande (80) comprend une section de mémoire stockant des programmes de commande pour diverses opérations de la machine de compactage de poudre.

4. Une machine électrique de compactage de poudre selon la revendication 3, dans laquelle les programmes de commande stockés comprennent :
(i) un premier programme de fonctionnement pour appliquer la pression de compactage au moyen du poinçon supérieur (32), le poinçon inférieur (33) étant maintenu dans une position déterminée à l'avance ;
(ii) un second programme de fonctionnement pour appliquer la pression de compactage au moyen des poinçons supérieur et inférieur (32) et (33) ;
(iii) un troisième programme de fonctionnement pour actionner alternativement les poinçons supérieur et inférieur (32) et (33) ;
(iv) un quatrième programme de fonctionnement pour fournir la matière en poudre pour un compactage par une pluralité d'actions et appliquer la pression de compactage au moyen du seul poinçon supérieur (32).
